# EUROPEAN PATENT APPLICATION

(11) **EP 4 629 500 A1**
(43) Date of publication of application: **08.10.2025**
(21) Application number: 25168833.9
(22) Date of filing: 07.04.2025
(51) Int. Cl.: H02M 7/493, H02M 7/5395, H02M 1/12

(54) **INVERTER AND INVERTER CIRCUIT CONTROL METHOD**

(30) Priority: 07.04.2024 CN 202410412148
(71) Applicant: Huawei Digital Power Technologies Co., Ltd., Shenzhen, Guangdong 518043 (CN)
(72) Inventor: CHANG, Song, Shenzhen, 518043 (CN); TANG, Junsong, Shenzhen, 518043 (CN); QIAN, Bin, Shenzhen, 518043 (CN); YU, Xinyu, Shenzhen, 518043 (CN); WANG, Chen, Shenzhen, 518043 (CN)
(74) Representative: Epping - Hermann - Fischer

(57) **Abstract**

Embodiments of this application disclose an inverter and an inverter circuit control method, and relate to the field of power electronic technologies, to resolve a problem of how to decrease a high-frequency ripple current output by the inverter. Specifically, an inverter is provided. The inverter includes an inverter circuit and a controller. The controller is configured to send a PWM signal to the inverter circuit, to drive the inverter circuit to invert a direct current to an alternating current and output the alternating current to a load, where the PWM signal is obtained based on a triangular carrier and a modulated wave. The controller is further configured to change a phase shift angle of the triangular carrier when a current parameter of the alternating current is greater than or equal to a current threshold, to reduce the current parameter of the alternating current, where the phase shift angle is a phase shift angle between a positive half-cycle triangular carrier and a negative half-cycle triangular carrier in the triangular carrier.

## Description

### TECHNICAL FIELD

This application relates to the field of power electronic technologies, and in particular, to an inverter and an inverter circuit control method.

### BACKGROUND

A pulse width modulation (pulse width modulation, PWM) technology is applied to various power electronic converters. For example, a corresponding PWM signal is output by comparing a modulated wave and a triangular carrier, to control turn-on and turn-off of a switching transistor in an inverter, so that the inverter can be controlled.

However, under control of a high-frequency PWM signal, the inverter generates a high-frequency ripple current. When the high-frequency ripple current is excessively large, electric energy quality is affected, and even the inverter fails. How to decrease the high-frequency ripple current output by the inverter becomes an urgent problem to be resolved.

### SUMMARY

Embodiments of this application provide an inverter and an inverter circuit control method, to resolve a problem of how to decrease a high-frequency ripple current output by the inverter.

To achieve the foregoing objective, the following technical solutions are used in embodiments of this application.

According to a first aspect of embodiments of this application, an inverter is provided. The inverter includes an inverter circuit and a controller. The controller is configured to send a PWM signal to the inverter circuit, to drive the inverter circuit to invert a direct current to an alternating current and output the alternating current to a load, where the PWM signal is obtained based on a triangular carrier and a modulated wave. The controller is further configured to change a phase shift angle of the triangular carrier when a current parameter of the alternating current is greater than or equal to a current threshold, to reduce the current parameter of the alternating current, where the phase shift angle is a phase shift angle between a positive half-cycle triangular carrier and a negative half-cycle triangular carrier in the triangular carrier.

In a possible embodiment, a type of the inverter includes a three-level inverter, a five-level inverter, and a seven-level inverter. A specific type of the inverter is not limited in this embodiment of this application.

Based on this solution, the controller sends the PWM signal to the inverter circuit, to drive the inverter circuit to invert the direct current to the alternating current and output the alternating current to the load. The PWM signal is obtained based on the triangular carrier and the modulated wave. The controller changes the phase shift angle of the triangular carrier when the current parameter of the alternating current is greater than or equal to the current threshold, to reduce the current parameter of the alternating current. The current parameter of the alternating current may be a ripple current parameter or a leakage current parameter. Therefore, it can be ensured that the ripple current parameter of the alternating current output by the inverter circuit is less than a ripple current threshold, or the leakage current parameter is less than a leakage current threshold, so that a high-frequency ripple current or a leakage current output by the inverter circuit can be decreased, and reliability of the inverter can be improved. When the inverter is used in a power supply system, and a plurality of inverters form an inverter parallel system, there is no need to increase a length of a parallel cable or apply a magnetic ring to decrease a superimposed high-frequency ripple current. This does not cause high costs of the power supply system and reduction of power density and efficiency.

With reference to the first aspect, in a possible implementation, the current parameter of the alternating current is a ripple current parameter, and the current threshold is a ripple current threshold. The controller is configured to decrease the phase shift angle of the triangular carrier when the ripple current parameter is greater than or equal to the ripple current threshold, to reduce the ripple current parameter.

Based on this solution, the controller decreases the phase shift angle of the triangular carrier when the ripple current parameter is greater than or equal to the ripple current threshold. In this case, when the controller determines the PWM signal based on the modulated wave and the triangular carrier whose phase shift angle is decreased and sends the PWM signal to the inverter circuit, the ripple current parameter of the alternating current output by the inverter circuit can be reduced, so that the ripple current parameter is less than the ripple current threshold, the high-frequency ripple current output by the inverter circuit can be decreased, and the reliability of the inverter can be improved.

With reference to the first aspect, in a possible implementation, the controller is further configured to: when the ripple current parameter is greater than or equal to the ripple current threshold, and a leakage current parameter of the alternating current is greater than or equal to a leakage current threshold, decrease a common-mode component injected into the modulated wave.

Based on this solution, when the ripple current parameter is greater than or equal to the ripple current threshold, and the leakage current parameter of the alternating current is greater than or equal to the leakage current threshold, the controller decreases the common-mode component injected into the modulated wave and decreases an amplitude of a common-mode component of a pulse width modulation signal sent by the controller to the inverter circuit, to reduce the leakage current parameter of the alternating current output by the inverter circuit. In addition, the controller may decrease the phase shift angle of the triangular carrier and reduce the ripple current parameter of the alternating current output by the inverter circuit, so that the leakage current parameter is less than the leakage current threshold, and the ripple current parameter is less than the ripple current threshold. Therefore, both the high-frequency ripple current and the leakage current that are output by the inverter circuit can be decreased, and the reliability of the inverter can be improved.

With reference to the first aspect, in a possible implementation, the current parameter of the alternating current is a leakage current parameter, and the current threshold is a leakage current threshold. The controller is configured to increase the phase shift angle of the triangular carrier when the leakage current parameter is greater than or equal to the leakage current threshold, to reduce the leakage current parameter.

Based on this solution, the controller increases the phase shift angle of the triangular carrier when the leakage current parameter is greater than or equal to the leakage current threshold. Therefore, when the controller determines the PWM signal based on the modulated wave and the triangular carrier whose phase shift angle is increased and sends the PWM signal to the inverter circuit, the leakage current parameter of the alternating current output by the inverter circuit can be reduced, so that the leakage current parameter is less than the leakage current threshold, the leakage current output by the inverter circuit can be decreased, and the reliability of the inverter can be improved.

With reference to the first aspect, in a possible implementation, the controller is further configured to: when the leakage current parameter is greater than or equal to the leakage current threshold, and a ripple current parameter of the alternating current is greater than or equal to a ripple current threshold, control the inverter circuit to reduce output power.

Based on this solution, when the leakage current parameter is greater than or equal to the leakage current threshold, and the ripple current parameter of the alternating current is greater than or equal to the ripple current threshold, the controller controls the inverter circuit to reduce the output power, to reduce the ripple current parameter of the alternating current output by the inverter circuit. In addition, the controller may increase the phase shift angle of the triangular carrier, to reduce the leakage current parameter of the alternating current output by the inverter circuit, so that the ripple current parameter is less than the ripple current threshold, and the leakage current parameter is less than the leakage current threshold. Therefore, both the high-frequency ripple current and the leakage current that are output by the inverter circuit can be decreased, and the reliability of the inverter can be improved.

With reference to the first aspect, in a possible implementation, the changing a phase shift angle of the triangular carrier includes adjusting the phase shift angle of the triangular carrier based on a fixed step. The adjustment based on the fixed step indicates that a fixed angle increment or decrement is used each time the phase shift angle of the triangular carrier is adjusted.

Based on this solution, the controller adjusts the phase shift angle of the triangular carrier based on the fixed step. The adjustment based on the fixed step indicates that the fixed angle increment or decrement is used each time the phase shift angle of the triangular carrier is adjusted. In comparison with traversing each phase shift angle in sequence, adjusting the phase shift angle of the triangular carrier based on the fixed step can improve efficiency of adjusting the phase shift angle, and can reduce a calculation amount of the controller and reduce power consumption of the controller.

According to a second aspect of embodiments of this application, an inverter circuit control method is provided, and is applied to an inverter. A structure of the inverter is the structure of the inverter according to any one of the first aspect or the possible implementations of the first aspect. The method includes: sending a PWM signal to an inverter circuit, to drive the inverter circuit to invert a direct current to an alternating current and outputting the alternating current to a load, where the PWM signal is obtained based on a triangular carrier and a modulated wave; and changing a phase shift angle of the triangular carrier when a current parameter of the alternating current is greater than or equal to a current threshold, to reduce the current parameter of the alternating current, where the phase shift angle is a phase shift angle between a positive half-cycle triangular carrier and a negative half-cycle triangular carrier in the triangular carrier.

With reference to the second aspect, in a possible implementation, the current parameter of the alternating current is a ripple current parameter, the current threshold is a ripple current threshold, and the changing a phase shift angle of the triangular carrier when a current parameter of the alternating current is greater than or equal to a current threshold, to reduce the current parameter of the alternating current includes: decreasing the phase shift angle of the triangular carrier when the ripple current parameter is greater than or equal to the ripple current threshold, to reduce the ripple current parameter.

With reference to the second aspect, in a possible implementation, the method further includes: when the ripple current parameter is greater than or equal to the ripple current threshold, and a leakage current parameter of the alternating current is greater than or equal to a leakage current threshold, decreasing a common-mode component injected into the modulated wave.

With reference to the second aspect, in a possible implementation, the current parameter of the alternating current is a leakage current parameter, the current threshold is a leakage current threshold, and the changing a phase shift angle of the triangular carrier when a current parameter of the alternating current is greater than or equal to a current threshold, to reduce the current parameter of the alternating current includes: increasing the phase shift angle of the triangular carrier when the leakage current parameter is greater than or equal to the leakage current threshold, to reduce the leakage current parameter.

With reference to the second aspect, in a possible implementation, the method further includes: when the leakage current parameter is greater than or equal to the leakage current threshold, and a ripple current parameter of the alternating current is greater than or equal to a ripple current threshold, controlling the inverter circuit to reduce output power.

With reference to the second aspect, in a possible implementation, the changing a phase shift angle of the triangular carrier includes adjusting the phase shift angle of the triangular carrier based on a fixed step. The adjustment based on the fixed step indicates that a fixed angle increment or decrement is used each time the phase shift angle of the triangular carrier is adjusted.

For descriptions of the second aspect in this application, refer to the detailed descriptions of the first aspect. In addition, for beneficial effects of the second aspect, refer to an analysis on the beneficial effects of the first aspect. Details are not described herein again.

### BRIEF DESCRIPTION OF DRAWINGS

FIG. 1 is a diagram of generating a PWM signal of an inverter;
FIG. 2 is a diagram of a structure of an inverter parallel system;
FIG. 3 is another diagram of generating a PWM signal of an inverter;
FIG. 4 is a diagram of waveforms of an inter-phase differential-mode component;
FIG. 5 is a diagram of waveforms of an inter-phase common-mode component;
FIG. 6 is a diagram of an application scenario of an inverter according to an embodiment of this application; and
FIG. 7 is a schematic flowchart of an inverter circuit control method according to an embodiment of this application.

### DESCRIPTION OF EMBODIMENTS

The production and use of embodiments are discussed in detail below. However, it should be appreciated that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used herein have same meanings as those commonly known to a person of ordinary skill in the art.

Each circuit or another component may be described as or referred to as being "configured to" perform one or more tasks. In this case, the term "configured to" is used to imply a structure by indicating that the circuit/component includes a structure (for example, a circuit system) that performs one or more tasks during operation. Therefore, even when a specified circuit/component is currently not operable (for example, not turned on), the circuit/component may also be referred to as being configured to perform the task. The circuit/component used together with the term "configured to" includes hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" do not limit a quantity or a sequence.

In this application, terms such as "example" or "for example" indicate giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relative concept in a specific manner.

Before embodiments of this application are described, technical terms and background technologies in this application are first described.

Inverter: The inverter is a converter that converts a direct current into an alternating current, and is also referred to as a direct current to alternating current converter (direct current to alternating current converter, DC/AC Converter).

Stress specification: The stress specification includes voltage stress and current stress. The voltage stress is a ratio of a working voltage of a component to a rated voltage. The current stress is a ratio of a working current of the component to a rated current.

Residual current operated protective device (residual current operated protective device, RCD): The residual current operated protective device is a component that prevents a personal electric shock, an electrical fire, and damage to an electrical device, and may be configured to detect a leakage current.

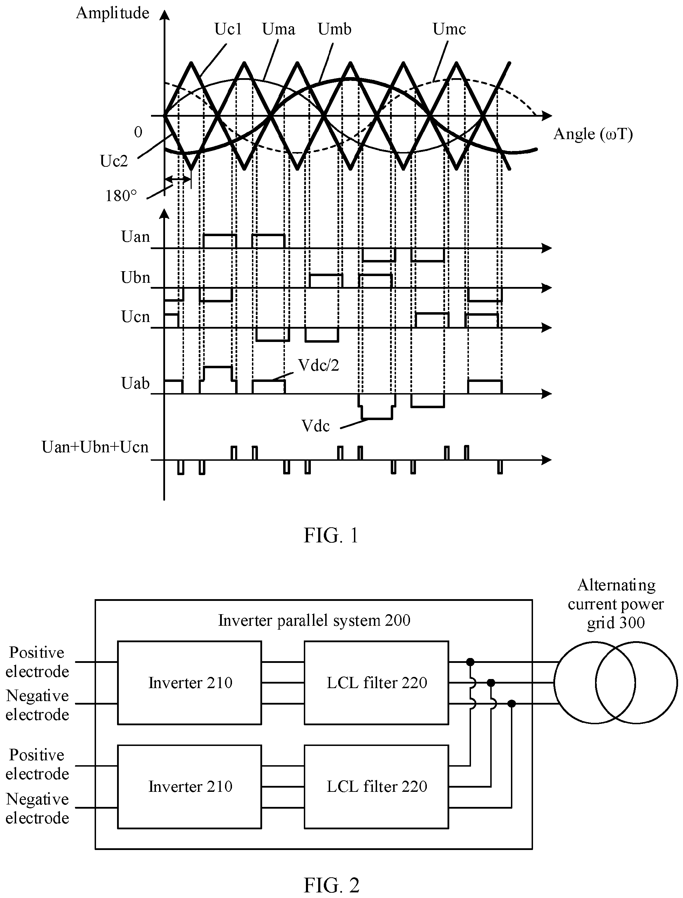

FIG. 1 is a diagram of generating a PWM signal of a three-level inverter. A processing circuit in the three-level inverter adjusts a phase shift angle between a positive half-cycle triangular carrier Uc1 and a negative half-cycle triangular carrier Uc2 to 180° (degrees), then compares the positive half-cycle triangular carrier Uc1 and the negative half-cycle triangular carrier Uc2 with modulated waves (Uma, Umb, and Umc), and outputs corresponding PWM signals (Uan, Ubn, and Ucn), to control turn-on and turn-off of a switch in the three-level inverter, so that the three-level inverter can be controlled to output a three-phase alternating current (phase A, phase B, and phase C), and symmetry of a three-phase voltage output by the three-level inverter can be implemented.

Specifically, as shown in FIG. 1, in a positive half cycle of a modulated wave (for example, Uma), when the modulated wave is greater than the positive half-cycle triangular carrier Uc1, a corresponding output PWM signal (Uan) is at a positive level (Vdc/2), where Vdc is a direct current voltage that is input to the three-level inverter. In a negative half cycle of the modulated wave, when the modulated wave (Uma) is less than the negative half-cycle triangular carrier Uc2, a corresponding output PWM signal (Uan) is at a negative level (-Vdc/2), and a corresponding output PWM signal (Uan) in another state is at a zero level. Therefore, three-level output of the three-level inverter can be implemented.

However, when the phase shift angle between the positive half-cycle triangular carrier Uc1 and the negative half-cycle triangular carrier Uc2 is adjusted to 180°, then the positive half-cycle triangular carrier Uc1 and the negative half-cycle triangular carrier Uc2 are compared with the modulated waves, and the corresponding PWM signals are output to control the three-level inverter, an inter-phase differential-mode component is superimposed as Vdc in a large duty cycle interval. For example, as shown in FIG. 1, an inter-phase differential-mode component Uab between the phase A and the phase B is superimposed as Vdc in a large duty cycle interval. As a result, the three-level inverter generates a larger high-frequency ripple current. When the high-frequency ripple current is excessively large, quality of electric energy output by the three-level inverter is affected, a stress specification of the three-level inverter is even exceeded, and consequently, the three-level inverter fails.

In the conventional technology, a port filter is added to an output end of an inverter, so that a high-frequency ripple current output by the inverter can be decreased. However, when a plurality of inverters are connected in parallel, a high-frequency ripple current superimposed between the inverters increases a risk of failures of the inverters and port filters.

For example, FIG. 2 is a diagram of a structure of an inverter parallel system 200. The inverter parallel system 200 includes a plurality of inverters 210 and a plurality of LCL filters 220. Two input ends of each of the inverters 210 are connected to a positive electrode and a negative electrode of a direct power supply respectively. Three-phase output ends of the plurality of inverters 210 are connected to three-phase input ends of the plurality of LCL filters 220 respectively, and three-phase output ends of the plurality of LCL filters 220 are connected to input ends of an alternating current power grid (alternate current power grid, AC grid) 300.

The plurality of inverters 210 are separately configured to: receive a direct current, convert the direct current into a three-phase alternating current, and output the three-phase alternating current. The plurality of LCL filters 220 are separately configured to: filter a received three-phase alternating current and output a filtered three-phase alternating current to the alternating current power grid 300.

In the inverter parallel system 200, although each of the LCL filters 220 may decrease a high-frequency ripple current output by an inverter 210 corresponding to the LCL filter 220, a risk of failures of each of the inverters 210 and each of the LCL filters 220 is increased after a plurality of high-frequency ripple currents output by the plurality of inverters 210 are superimposed. To decrease the risk of the failures of the inverter 210 and the filter 220 in the inverter parallel system 200, a length of a parallel cable may be increased or a magnetic ring may be applied to decrease a superimposed high-frequency ripple current. However, consequently, costs of the inverter parallel system 200 are high, and power density and efficiency are reduced.

To resolve the foregoing problems, in this application, a relationship between the phase shift angle between the positive half-cycle triangular carrier Uc1 and the negative half-cycle triangular carrier Uc2 and the high-frequency ripple current output by the three-level inverter is researched. Through experiment and testing, it is found that a larger phase shift angle indicates a larger high-frequency ripple current output by the three-level inverter, and a smaller phase shift angle indicates a smaller high-frequency ripple current output by the three-level inverter.

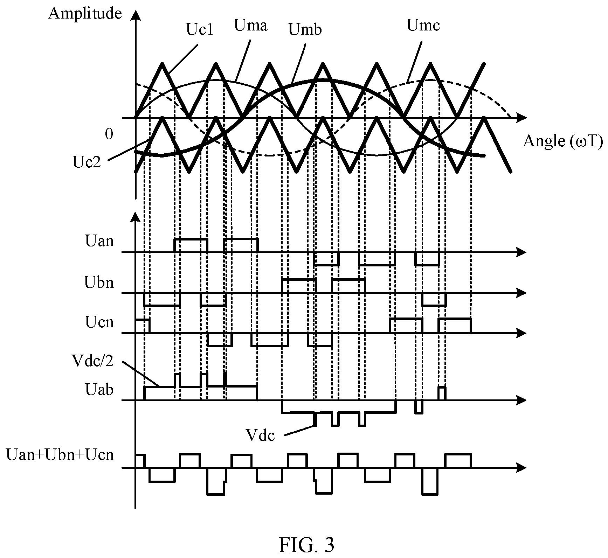

For example, as shown in FIG. 1, when the phase shift angle is 180°, the inter-phase differential-mode component Uab between the phase A and the phase B is superimposed as Vdc in the large duty cycle interval. As a result, the three-level inverter outputs a large high-frequency ripple current. As shown in FIG. 3, when the phase shift angle is 0°, the inter-phase differential-mode component Uab between the phase A and the phase B is superimposed as Vdc in a small duty cycle interval. Therefore, the three-level inverter outputs a small high-frequency ripple current.

In addition, through experiment and testing, it is further found that a larger phase shift angle indicates a smaller leakage current output by the three-level inverter, and a smaller phase shift angle indicates a larger leakage current output by the three-level inverter.

For example, as shown in FIG. 1, when the phase shift angle is 180°, an amplitude of a common-mode component Uan+Ubn+Ucn superimposed among the PWM signals (Uan, Ubn, and Ucn) is small. Therefore, the three-level inverter outputs a small leakage current. When the phase shift angle is 0°, the amplitude of the common-mode component Uan+Ubn+Ucn superimposed among the PWM signals is large. As a result, the three-level inverter outputs a large leakage current.

Further, a plurality of phase shift angles 45°, 90°, and 135° that are between 0° and 180° with an interval of 45° are tested, to verify the foregoing conclusions.

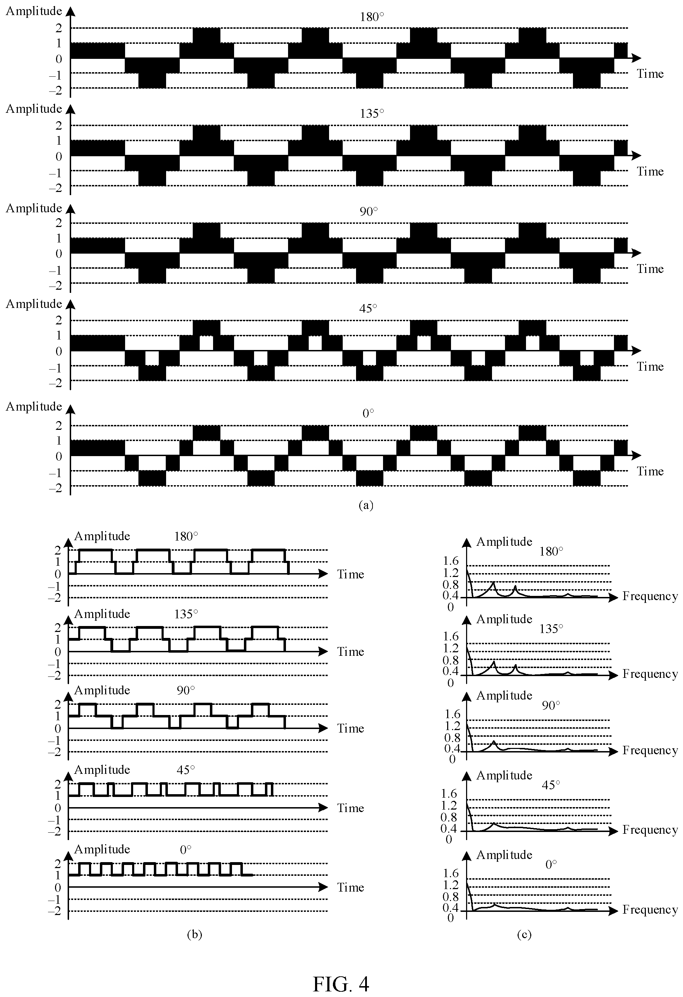

(a) in FIG. 4 is a diagram of waveforms of the inter-phase differential-mode component Uab between the phase A and the phase B at different phase shift angles. (b) in FIG. 4 is a partially enlarged view of the waveforms of the inter-phase differential-mode component Uab. Based on the partially enlarged view, it may be understood that, an interval in which the inter-phase differential-mode component Uab is superimposed as Vdc is largest when the phase shift angle is 180°. With a decrease in the phase shift angle, the interval in which the inter-phase differential-mode component Uab is superimposed as Vdc is smallest when the phase shift angle is 0°. (c) in FIG. 4 is a spectrum graph obtained through fast Fourier transform (fast Fourier transform, FFT) performed on the diagram of the waveforms of the inter-phase differential-mode component Uab. Based on the spectrum graph, it can be learned that, an amplitude of a high-frequency signal is continuously reduced in a process in which the phase shift angle is reduced from 180° to 0°, so that the high-frequency ripple current output by the three-level inverter is also continuously reduced. It may be understood that, a larger phase shift angle indicates a larger high-frequency ripple current output by the three-level inverter, and a smaller phase shift angle indicates a smaller high-frequency ripple current output by the three-level inverter. The foregoing conclusion is met.

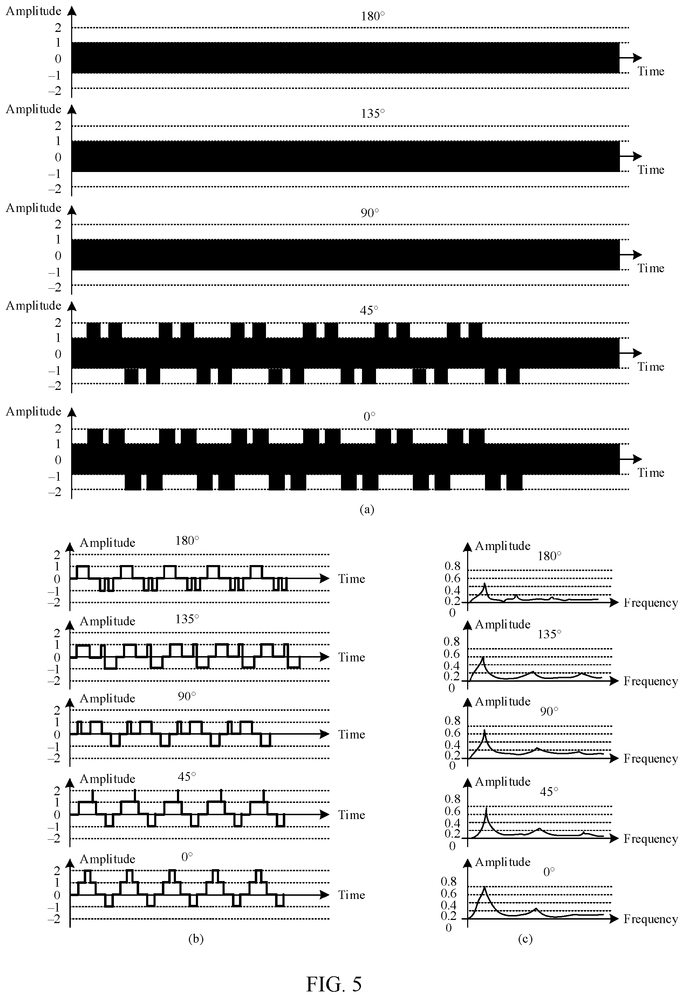

(a) in FIG. 5 is a diagram of waveforms of the common-mode component Uan+Ubn+Ucn superimposed among the PWM signals at different phase shift angles. (b) in FIG. 5 is a partially enlarged view of the waveforms of the common-mode component Uan+Ubn+Ucn. Based on the partially enlarged view, it may be understood that, the amplitude of the common-mode component Uan+Ubn+Ucn is smallest when the phase shift angle is 180°. With a decrease in the phase shift angle, the amplitude of the common-mode component Uan+Ubn+Ucn is largest when the phase shift angle is 0°. (c) in FIG. 5 is a spectrum graph obtained through fast Fourier transform performed on the diagram of the waveforms of the common-mode component Uan+Ubn+Ucn. Based on the spectrum graph, it can be learned that, the amplitude of the common-mode component Uan+Ubn+Ucn is continuously increased in the process in which the phase shift angle is decreased from 180° to 0°. As a result, the leakage current output by the three-level inverter is also continuously increased. It may be understood that, a larger phase shift angle indicates a smaller leakage current output by the three-level inverter, and a smaller phase shift angle indicates a larger leakage current output by the three-level inverter. The foregoing conclusion is met.

In conclusion, the high-frequency ripple current and the leakage current that are output by the three-level inverter may be adjusted by adjusting the phase shift angle between the positive half-cycle triangular carrier Uc1 and the negative half-cycle triangular carrier Uc2.

Based on this, an embodiment of this application provides an inverter. The inverter may decrease, by adjusting a phase shift angle, a high-frequency ripple current output by the inverter, to improve reliability of the inverter. In addition, an excessively large leakage current output by the inverter also results in a failure of the inverter. Therefore, the inverter may also decrease, by adjusting a phase shift angle, the leakage current output by the inverter, to further improve the reliability of the inverter.

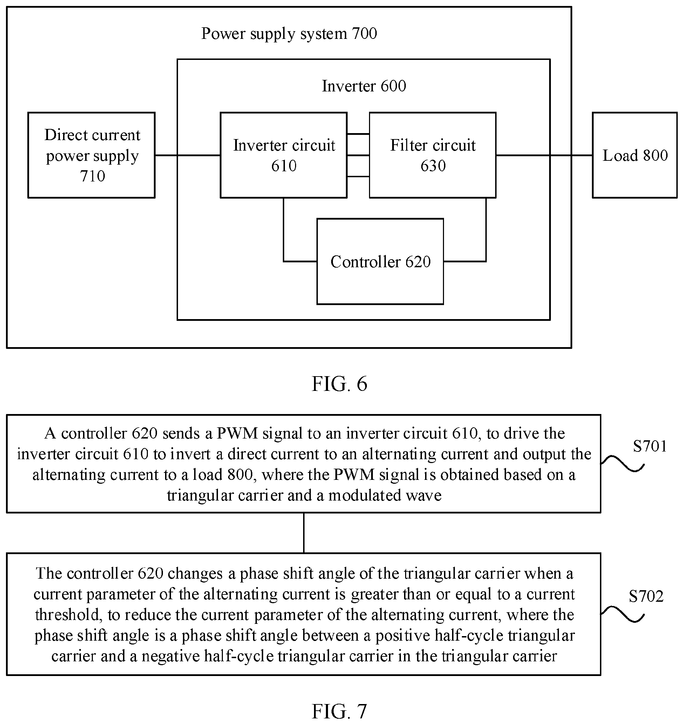

As shown in FIG. 6, an inverter 600 provided in this embodiment of this application may be used as an independent device. Optionally, a type of the inverter 600 includes a three-level inverter, a five-level inverter, and a seven-level inverter. A specific type of the inverter 600 is not limited in this embodiment of this application.

As shown in FIG. 6, the inverter 600 provided in this embodiment of this application may also be used in a power supply system 700. The power supply system 700 includes a direct current power supply 710 and the inverter 600 connected to the direct current power supply 710. Optionally, a type of the power supply system 700 may include but is not limited to a charging pile, a vehicle, and an energy storage station. This is not limited in this embodiment of this application. When the power supply system 700 is an energy storage station, the type of the power supply system 700 may include at least one of a photovoltaic energy storage system, a wind power generation energy storage system, or a power station energy storage system.

In a possible embodiment, the power supply system 700 may include a plurality of inverters 600, and the plurality of inverters 600 may be connected in parallel. In this case, the power supply system 700 may also be referred to as an inverter parallel system.

FIG. 6 is a diagram of a structure of an inverter 600 according to an embodiment of this application. The inverter 600 includes an inverter circuit 610 and a controller 620 connected to the inverter circuit 610.

The controller 620 is configured to send a PWM signal to the inverter circuit 610, to drive the inverter circuit 610 to invert a direct current to an alternating current and output the alternating current to a load 800, where the PWM signal is obtained based on a triangular carrier and a modulated wave. The load 800 may be a power-consuming device or may be a power grid. The controller 620 is further configured to change a phase shift angle of the triangular carrier when a current parameter of the alternating current is greater than or equal to a current threshold, to reduce the current parameter of the alternating current, where the phase shift angle is a phase shift angle between a positive half-cycle triangular carrier and a negative half-cycle triangular carrier in the triangular carrier.

In a possible embodiment, the current parameter of the alternating current is a ripple current parameter, and the current threshold is a ripple current threshold. The controller 620 is configured to decrease the phase shift angle of the triangular carrier when the ripple current parameter is greater than or equal to the ripple current threshold. In this case, when the controller 620 determines the PWM signal based on the modulated wave and the triangular carrier whose phase shift angle is decreased and sends the PWM signal to the inverter circuit 610, the ripple current parameter of the alternating current output by the inverter circuit 610 can be reduced, so that the ripple current parameter is less than the ripple current threshold, a high-frequency ripple current output by the inverter circuit 610 can be decreased, and reliability of the inverter 600 can be improved. A specific value of the ripple current threshold is not limited in this embodiment of this application.

In a possible embodiment, the controller 620 is further configured to: when the ripple current parameter is greater than or equal to the ripple current threshold, and a leakage current parameter of the alternating current is greater than or equal to a leakage current threshold, decrease a common-mode component injected into the modulated wave and decrease an amplitude of a common-mode component of a pulse width modulation signal sent by the controller 620 to the inverter circuit 610, to reduce the leakage current parameter of the alternating current output by the inverter circuit 610. In addition, the controller 620 may decrease the phase shift angle of the triangular carrier and reduce the ripple current parameter of the alternating current output by the inverter circuit 610, so that the leakage current parameter is less than the leakage current threshold, and the ripple current parameter is less than the ripple current threshold. Therefore, both the high-frequency ripple current and a leakage current that are output by the inverter circuit 610 can be decreased, and the reliability of the inverter 600 can be improved. A specific value of the leakage current threshold is not limited in this embodiment of this application.

In a possible embodiment, the current parameter of the alternating current is a leakage current parameter, and the current threshold is a leakage current threshold. The controller 620 is configured to increase the phase shift angle of the triangular carrier when the leakage current parameter is greater than or equal to the leakage current threshold. In this case, when the controller 620 determines the PWM signal based on the modulated wave and the triangular carrier whose phase shift angle is increased and sends the PWM signal to the inverter circuit 610, the leakage current parameter of the alternating current output by the inverter circuit 610 can be reduced, so that the leakage current parameter is less than the leakage current threshold, a leakage current output by the inverter circuit 610 can be decreased, and reliability of the inverter 600 can be improved. A specific value of the leakage current threshold is not limited in this embodiment of this application.

In a possible embodiment, the controller 620 is further configured to: when the leakage current parameter is greater than or equal to the leakage current threshold, and the ripple current parameter of the alternating current is greater than or equal to the ripple current threshold, control the inverter circuit 610 to reduce output power, to reduce the ripple current parameter of the alternating current output by the inverter circuit 610. In addition, the controller 620 may increase the phase shift angle of the triangular carrier, to reduce the leakage current parameter of the alternating current output by the inverter circuit 610, so that the ripple current parameter is less than the ripple current threshold, and the leakage current parameter is less than the leakage current threshold. Therefore, both a high-frequency ripple current and the leakage current that are output by the inverter circuit 610 can be decreased, and the reliability of the inverter 600 can be improved.

In a possible embodiment, as shown in FIG. 6, the inverter 600 further includes a filter circuit 630. An input end of the filter circuit 630 is connected to an output end of the inverter circuit 610, and an output end of the filter circuit 630 is configured to connect to the load 800. The filter circuit 630 is configured to filter the alternating current output by the inverter circuit 610.

In a possible embodiment, the filter circuit 630 may include an LCL filter. When the inverter circuit 610 inverts the direct current to a three-phase alternating current for output, the filter circuit 630 may include three LCL filters, and the three LCL filters are connected to three-phase output ends of the inverter circuit 610 respectively. For a specific connection manner, refer to the conventional technology. Details are not described herein again in this embodiment of this application.

In a possible embodiment, the controller 620 is further connected to the filter circuit 630, and the controller 620 is configured to detect an alternating current filtered by the filter circuit 630, to determine a current parameter of the alternating current.

In a possible embodiment, the controller 620 may include a Hall element and/or a residual current operated protective device. The Hall element is configured to detect a ripple current of the filtered alternating current. The residual current operated protective device is configured to detect a leakage current of the filtered alternating current.

Specifically, when the inverter circuit 610 inverts the direct current to the three-phase alternating current for output, the controller 620 may include three Hall elements, and the three Hall elements are separately configured to detect a ripple current of a one-phase alternating current. Alternatively, the controller 620 may include more Hall elements, and the more Hall elements may be respectively configured to detect a ripple current that flows through an inductor L and a capacitor C of each LCL filter in the filter circuit 630 and a ripple current at an output end of each LCL filter, to further improve ripple current detection accuracy. A specific quantity of Hall elements included in the controller 620 is not limited in this embodiment of this application. The residual current operated protective device may be connected to the output end of each LCL filter in the filter circuit 630, to detect a leakage current of the filtered alternating current. For a specific detection process, refer to the conventional technology. Details are not described herein again in this embodiment of this application.

In a possible embodiment, the controller 620 includes a processor. The processor may be a processor, a controller, a programmable circuit, or the like. For example, the processor is a microcontroller unit (microcontroller unit, MCU), or may be referred to as a single-chip microcomputer.

According to the inverter 600 provided in this embodiment of this application, the controller 620 sends the PWM signal to the inverter circuit 610, to drive the inverter circuit 610 to invert the direct current to the alternating current and output the alternating current to the load 800. The PWM signal is obtained based on the triangular carrier and the modulated wave. When the current parameter of the alternating current is greater than or equal to the current threshold, the controller 620 changes the phase shift angle of the triangular carrier to reduce the current parameter of the alternating current. The current parameter of the alternating current may be a ripple current parameter or a leakage current parameter. Therefore, it can be ensured that the ripple current parameter of the alternating current output by the inverter circuit 610 is less than the ripple current threshold, or the leakage current parameter is less than the leakage current threshold, so that the high-frequency ripple current or the leakage current output by the inverter circuit 610 can be decreased, and the reliability of the inverter 600 can be improved. When the inverter 600 is used in the power supply system 700, and the plurality of inverters 600 form an inverter parallel system, there is no need to increase a length of a parallel cable or apply a magnetic ring to decrease a superimposed high-frequency ripple current. This does not cause high costs of the power supply system 700 and reduction of power density and efficiency.

In a possible embodiment, that the controller 620 changes a phase shift angle of the triangular carrier includes that the controller 620 traverses each phase shift angle in sequence or the controller 620 adjusts the phase shift angle of the triangular carrier based on a fixed step. The adjustment based on the fixed step indicates that a fixed angle increment or decrement is used each time the phase shift angle of the triangular carrier is adjusted. A specific step of the fixed step is not limited in this embodiment of this application. In comparison with traversing each phase shift angle in sequence, adjusting the phase shift angle of the triangular carrier based on the fixed step can improve efficiency of adjusting the phase shift angle of the triangular carrier, and can reduce a calculation amount of the controller 620 and reduce power consumption of the controller 620.

For example, the controller 620 may adjust the phase shift angle of the triangular carrier between the five angles 0°, 45°, 90°, 135°, and 180° based on a fixed step of 45°.

According to the inverter 600 provided in this embodiment of this application, the controller 620 adjusts the phase shift angle of the triangular carrier based on the fixed step. The adjustment based on the fixed step indicates that the fixed angle increment or decrement is used each time the phase shift angle of the triangular carrier is adjusted. In comparison with traversing each phase shift angle in sequence, adjusting the phase shift angle of the triangular carrier based on the fixed step can improve efficiency of adjusting the phase shift angle, and can reduce the calculation amount of the controller 620 and reduce the power consumption of the controller 620.

Based on this, as shown in FIG. 7, an embodiment of this application further provides a control method for an inverter circuit 610, applied to the foregoing inverter 600. The method includes steps S701 and S702.

S701: A controller 620 sends a PWM signal to the inverter circuit 610, to drive the inverter circuit 610 to invert a direct current to an alternating current and output the alternating current to a load 800, where the PWM signal is obtained based on a triangular carrier and a modulated wave.

S702: The controller 620 changes a phase shift angle of the triangular carrier when a current parameter of the alternating current is greater than or equal to a current threshold, to reduce the current parameter of the alternating current, where the phase shift angle is a phase shift angle between a positive half-cycle triangular carrier and a negative half-cycle triangular carrier in the triangular carrier.

In a possible embodiment, the current parameter of the alternating current is a ripple current parameter, and the current threshold is a ripple current threshold. That the controller 620 changes a phase shift angle of the triangular carrier when a current parameter of the alternating current is greater than or equal to a current threshold, to reduce the current parameter of the alternating current includes: The controller 620 decreases the phase shift angle of the triangular carrier when the ripple current parameter is greater than or equal to the ripple current threshold. In this case, when the controller 620 determines the PWM signal based on the modulated wave and the triangular carrier whose phase shift angle is decreased and sends the PWM signal to the inverter circuit 610, the ripple current parameter of the alternating current output by the inverter circuit 610 can be reduced, so that the ripple current parameter is less than the ripple current threshold, a high-frequency ripple current output by the inverter circuit 610 can be decreased, and reliability of the inverter 600 can be improved. A specific value of the ripple current threshold is not limited in this embodiment of this application.

In a possible embodiment, when the ripple current parameter is greater than or equal to the ripple current threshold, and a leakage current parameter of the alternating current is greater than or equal to a leakage current threshold, the controller 620 decreases a common-mode component injected into the modulated wave and decreases an amplitude of a common-mode component of a pulse width modulation signal sent by the controller 620 to the inverter circuit 610, to reduce the leakage current parameter of the alternating current output by the inverter circuit 610. In addition, the controller 620 may decrease the phase shift angle of the triangular carrier and reduce the ripple current parameter of the alternating current output by the inverter circuit 610, so that the leakage current parameter is less than the leakage current threshold, and the ripple current parameter is less than the ripple current threshold. Therefore, both the high-frequency ripple current and a leakage current that are output by the inverter circuit 610 can be decreased, and the reliability of the inverter 600 can be improved. A specific value of the leakage current threshold is not limited in this embodiment of this application.

In a possible embodiment, the current parameter of the alternating current is a leakage current parameter, and the current threshold is a leakage current threshold. Changing the phase shift angle of the triangular carrier when the current parameter of the alternating current is greater than or equal to the current threshold, to reduce the current parameter of the alternating current includes: The controller 620 increases the phase shift angle of the triangular carrier when the leakage current parameter is greater than or equal to the leakage current threshold. In this case, when the controller 620 determines the PWM signal based on the modulated wave and the triangular carrier whose phase shift angle is increased and sends the PWM signal to the inverter circuit 610, the leakage current parameter of the alternating current output by the inverter circuit 610 can be reduced, so that the leakage current parameter is less than the leakage current threshold, a leakage current output by the inverter circuit 610 can be decreased, and reliability of the inverter 600 can be improved. A specific value of the leakage current threshold is not limited in this embodiment of this application.

In a possible embodiment, when the leakage current parameter is greater than or equal to the leakage current threshold, and the ripple current parameter of the alternating current is greater than or equal to the ripple current threshold, the controller 620 controls the inverter circuit to reduce output power, to reduce the ripple current parameter of the alternating current output by the inverter circuit 610. In addition, the controller 620 may increase the phase shift angle of the triangular carrier, to reduce the leakage current parameter of the alternating current output by the inverter circuit 610, so that the ripple current parameter is less than the ripple current threshold, and the leakage current parameter is less than the leakage current threshold. Therefore, both a high-frequency ripple current and the leakage current that are output by the inverter circuit 610 can be decreased, and the reliability of the inverter 600 can be improved.

In a possible embodiment, that the controller 620 changes a phase shift angle of the triangular carrier includes that the controller 620 traverses each phase shift angle in sequence or the controller 620 adjusts the phase shift angle of the triangular carrier based on a fixed step. The adjustment based on the fixed step indicates that a fixed angle increment or decrement is used each time the phase shift angle of the triangular carrier is adjusted. A specific step of the fixed step is not limited in this embodiment of this application. In comparison with traversing each phase shift angle in sequence, adjusting the phase shift angle of the triangular carrier based on the fixed step can improve efficiency of adjusting the phase shift angle of the triangular carrier, and can reduce a calculation amount of the controller 620 and reduce power consumption of the controller 620.

According to the inverter control method provided in this embodiment of this application, the controller 620 sends the PWM signal to the inverter circuit 610, to drive the inverter circuit 610 to invert the direct current to the alternating current and output the alternating current to the load 800. The PWM signal is obtained based on the triangular carrier and the modulated wave. When the current parameter of the alternating current is greater than or equal to the current threshold, the controller 620 changes the phase shift angle of the triangular carrier to reduce the current parameter of the alternating current. The current parameter of the alternating current may be a ripple current parameter or a leakage current parameter. Therefore, it can be ensured that the ripple current parameter of the alternating current output by the inverter circuit 610 is less than the ripple current threshold, or the leakage current parameter is less than the leakage current threshold, so that the high-frequency ripple current or the leakage current output by the inverter circuit 610 can be decreased, and the reliability of the inverter 600 can be improved.

Based on this, an embodiment of this application further provides a power supply system. A structure of the power supply system may be the structure of the power supply system 700 shown in FIG. 6. The power supply system 700 includes a direct current power supply 710 and an inverter 600 connected to the direct current power supply 710. A structure of the inverter 600 is the structure of the inverter 600 shown in FIG. 6.

In a possible embodiment, a type of the power supply system 700 may include but is not limited to a charging pile, a vehicle, and an energy storage station. This is not limited in this embodiment of this application.

The foregoing detailed descriptions of the inverter 600 and an analysis on beneficial effects may be correspondingly introduced to the power supply system 700. Details are not described herein again in this embodiment of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An inverter, wherein the inverter comprises an inverter circuit and a controller;
the controller is configured to send a PWM signal to the inverter circuit, to drive the inverter circuit to invert a direct current to an alternating current and output the alternating current to a load, wherein the PWM signal is obtained based on a triangular carrier and a modulated wave; and
the controller is further configured to change a phase shift angle of the triangular carrier when a current parameter of the alternating current is greater than or equal to a current threshold, to reduce the current parameter of the alternating current, wherein the phase shift angle is a phase shift angle between a positive half-cycle triangular carrier and a negative half-cycle triangular carrier in the triangular carrier.

2. The inverter according to claim 1, wherein the current parameter of the alternating current is a ripple current parameter, and the current threshold is a ripple current threshold; and
the controller is configured to decrease the phase shift angle of the triangular carrier when the ripple current parameter is greater than or equal to the ripple current threshold, to reduce the ripple current parameter.

3. The inverter according to claim 2, wherein
the controller is further configured to: when the ripple current parameter is greater than or equal to the ripple current threshold, and a leakage current parameter of the alternating current is greater than or equal to a leakage current threshold, decrease a common-mode component injected into the modulated wave.

4. The inverter according to claim 1, wherein the current parameter of the alternating current is a leakage current parameter, and the current threshold is a leakage current threshold; and
the controller is configured to increase the phase shift angle of the triangular carrier when the leakage current parameter is greater than or equal to the leakage current threshold, to reduce the leakage current parameter.

5. The inverter according to claim 4, wherein
the controller is further configured to: when the leakage current parameter is greater than or equal to the leakage current threshold, and a ripple current parameter of the alternating current is greater than or equal to a ripple current threshold, control the inverter circuit to reduce output power.

6. The inverter according to any one of claims 1 to 5, wherein
the changing a phase shift angle of the triangular carrier comprises adjusting the phase shift angle of the triangular carrier based on a fixed step, wherein the adjustment based on the fixed step indicates that a fixed angle increment or decrement is used each time the phase shift angle of the triangular carrier is adjusted.

7. An inverter circuit control method, wherein the method comprises:
sending a PWM signal to an inverter circuit, to drive the inverter circuit to invert a direct current to an alternating current and outputting the alternating current to a load, wherein the PWM signal is obtained based on a triangular carrier and a modulated wave; and
changing a phase shift angle of the triangular carrier when a current parameter of the alternating current is greater than or equal to a current threshold, to reduce the current parameter of the alternating current, wherein the phase shift angle is a phase shift angle between a positive half-cycle triangular carrier and a negative half-cycle triangular carrier in the triangular carrier.

8. The method according to claim 7, wherein the current parameter of the alternating current is a ripple current parameter, the current threshold is a ripple current threshold, and the changing a phase shift angle of the triangular carrier when a current parameter of the alternating current is greater than or equal to a current threshold, to reduce the current parameter of the alternating current comprises:
decreasing the phase shift angle of the triangular carrier when the ripple current parameter is greater than or equal to the ripple current threshold, to reduce the ripple current parameter.

9. The method according to claim 8, wherein the method further comprises:
when the ripple current parameter is greater than or equal to the ripple current threshold, and a leakage current parameter of the alternating current is greater than or equal to a leakage current threshold, decreasing a common-mode component injected into the modulated wave.

10. The method according to claim 7, wherein the current parameter of the alternating current is a leakage current parameter, the current threshold is a leakage current threshold, and the changing a phase shift angle of the triangular carrier when a current parameter of the alternating current is greater than or equal to a current threshold, to reduce the current parameter of the alternating current comprises:
increasing the phase shift angle of the triangular carrier when the leakage current parameter is greater than or equal to the leakage current threshold, to reduce the leakage current parameter.

11. The method according to claim 10, wherein the method further comprises:
when the leakage current parameter is greater than or equal to the leakage current threshold, and a ripple current parameter of the alternating current is greater than or equal to a ripple current threshold, controlling the inverter circuit to reduce output power.

12. The method according to any one of claims 7 to 11, wherein
the changing a phase shift angle of the triangular carrier comprises adjusting the phase shift angle of the triangular carrier based on a fixed step, wherein the adjustment based on the fixed step indicates that a fixed angle increment or decrement is used each time the phase shift angle of the triangular carrier is adjusted.
